# EUROPEAN PATENT SPECIFICATION

(11) **EP 4 372 925 B1**
(45) Date of publication and mention of the grant of the patent: **17.06.2026**
(21) Application number: 22841500.6
(22) Date of filing: 15.07.2022
(51) Int. Cl.: H01R 13/03, H01R 13/193, H01R 11/05, H01R 4/01, H01R 13/11, H01R 13/66, H01R 13/52

(54) **TERMINAL HAVING MEMORY FUNCTION**
ENDGERÄT MIT SPEICHERFUNKTION
BORNE À FONCTION DE MÉMOIRE

(30) Priority: 15.07.2021 CN 202110803186; 15.07.2021 CN 202121613420 U
(43) Date of publication of application: 22.05.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/106045
(87) International publication number: WO 2023/284867

(56) References cited:
- EP-A1- 3 560 750
- CN-A- 113 363 747
- CN-U- 215 834 759
- CN-Y- 201 038 406
- JP-A- 2018 156 896
- JP-A- H08 186 414
- JP-A- S5 986 170
- JP-B2- 5 652 502
- US-A- 4 487 465
- US-A- 4 720 270
- US-A- 4 720 270
- US-B1- 6 186 841

## Description

### TECHNICAL FIELD

The present disclosure relates to a terminal having memory function.

### BACKGROUND

With the gradual popularization of electric vehicles, the market demands for charging plugs and charging sockets are also increasing. In the prior art, terminals on a charging plug, a charging pile, a charging socket and an automobile are all in contact with mating terminals by means of mechanical structures such as elastic pieces, bolt tightening, etc., and the mounting requires an insertion force and a tool, resulting in the problems of low efficiency of terminal butting and inconvenient mounting.

Conventional terminals are known in the prior art, e.g. from US4720270A, and EP3560750A1.

### SUMMARY

In order to improve the terminal butting efficiency, the present disclosure provides a terminal having memory function, which can realize a butting without an insertion force, and ensure a contact area and a contact force between a terminal and a mating terminal by a temperature rise during working, and improve contact reliability. Since the insertion force is not required, the work is easier and the working efficiency is improved.

The present disclosure adopts the following technical solutions to solve its technical problem:

A terminal having memory function, including a memory contact section that includes a plurality of contact claws. All or part of the contact claw is made of a memory alloy. The plurality of contact claws are arranged at intervals in a circumferential direction of the memory contact section, and the plurality of contact claws are capable of radially contracting. The memory contact section is a barrel structure, and the number of the contact claws is greater than or equal to three; when a temperature of the memory contact section is lower than a transformation temperature, distances between inner surfaces of outer ends of the plurality of contact claws and an axis of the memory contact section are alternately increased and decreased in the circumferential direction of the memory contact section; cross-sectional areas of the plurality of the contact claws are alternately increased and decreased in the circumferential direction of the memory contact section; and among the plurality of contact fingers, the distance between the inner surface of the outer end of the contact claw with a larger cross-sectional area and the axis of the memory contact section is greater than the distance between the inner surface of the outer end of the contact claw with a smaller cross-sectional area and the axis of the memory contact section.

The present disclosure has the following advantageous effects:
1. When the temperature of the terminal having memory function is below a transformation temperature, the plurality of contact claws of the memory contact section are normally in a radially expanded state, so that at this time, a mating terminal can be inserted into the memory contact section without an insertion force, which is convenient for an operator to easily plug an electric device. During working, the terminal conducts current, and the temperature of the terminal gradually increases due to resistance; when the temperature exceeds the transformation temperature, the plurality of contact claws radially contract, so that a contact area and a contact force between the terminal and the mating terminal are increased by the temperature rise, thereby improving contact reliability. Since the insertion force is not required, the work is easier and the working efficiency is improved.
2. The plugging terminal of the present disclosure adopts tellurium copper alloy, so that the terminal has good electrical conductivity and easy-cutting performance, thereby ensuring the electrical performance and improving the machinability. Meanwhile, the tellurium copper alloy has excellent elasticity.
3. The plugging terminal of the present disclosure adopts a plating layer, which can better improve the corrosion resistance. Exemplarily the plating layer is a composite plating layer, which can better improve the firmness of the plating layer, and ensure the plating layer not to fall off and the corrosion resistance even after many times of plugging and unplugging of the terminal.
4. The temperature sensor can extend deep into the terminal to obtain the most accurate temperature value of the terminal, so as to help the staff to acquire the temperature condition of the terminal during working.

### BRIEF DESCRIPTION OF DRAWINGS

The drawings illustrated here are intended to provide a further understanding of the present disclosure, and constitute a part of the present disclosure rather than limitations thereto. In the drawings:
FIG. 1 illustrates a stereoscopic diagram of contact claws of a terminal having memory function in an expanded state according to a first embodiment of the present disclosure.
FIG. 2 illustrates a stereoscopic diagram of contact claws of a terminal having memory function in a contracted state according to the first embodiment of the present disclosure.
FIG. 3 illustrates a cross-sectional diagram of contact claws of a terminal having memory function in the contracted state according to the first embodiment of the present disclosure.
FIG. 4 illustrates a schematic diagram in which an included angle between a plugging direction of a memory contact section and a wiring direction of a cable connection section is 90° in the first embodiment.
FIG. 5 is a stereoscopic diagram of a terminal having memory function according to a second embodiment of the present disclosure.
FIG. 6 is a cross-sectional diagram of a terminal having memory function according to the second embodiment of the present disclosure.
FIG. 7 is a stereoscopic diagram of a terminal having memory function according to a third embodiment of the present disclosure.
FIG. 8 is a cross-sectional diagram of a terminal having memory function according to the third embodiment of the present disclosure.

### DETAILED DESCRIPTION OF EMBODIMENTS

For a clearer understanding of the objectives, technical features and effects of the embodiments of the present disclosure, specific embodiments will now be described with reference to the drawings. The described embodiments are intended only to schematically illustrate and explain this invention and do not limit the scope of the present disclosure.

### First Embodiment

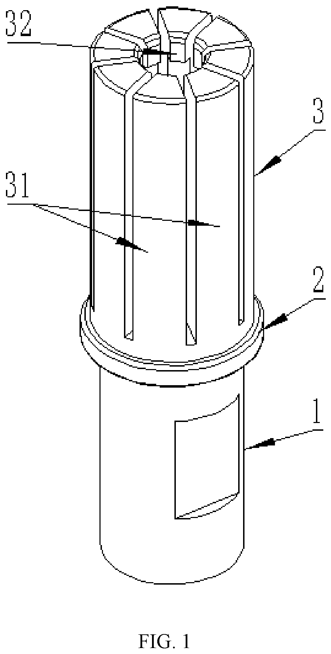

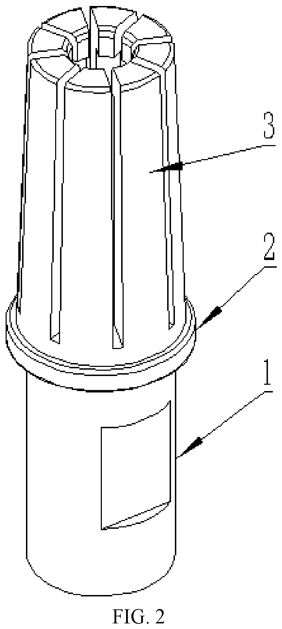

A terminal having memory function includes a memory contact section 3 that includes a plurality of contact claws 31. All or part of the contact claw 31 is made of a memory alloy. The plurality of contact claws 31 are arranged at intervals in a circumferential direction of the memory contact section 3, and the plurality of contact claws 31 are capable of radially contracting or expanding, as illustrated in FIGS. 1 and 2.

The plurality of contact claws 31 of the memory contact section 3 are normally in a radially expanded state at room temperature. When the temperature of the memory contact section 3 is higher than a transformation temperature, the plurality of contact claws 31 contract in a radial direction, and when the temperature of the memory contact section 3 is lower than the transformation temperature, the memory contact section 3 expands in the radial direction, thereby ensuring a contact area and a contact force between a terminal and a mating terminal by a temperature rise, and improving contact reliability. Since an insertion force is not required, the work is easier and the working efficiency is improved.

In this embodiment, the whole or part of the memory contact section 3 is made of a memory alloy. The memory contact section 3 is a barrel structure, an outer profile of a cross section of the memory contact section 3 is circular or polygonal (e.g., triangular, square, pentagonal, hexagonal, heptagonal or octagonal), and an inner profile of the cross section of the memory contact section 3 is circular or polygonal.

In this embodiment, the contact claw 31 is an elongated columnar structure, and a cross section of the contact claw 31 may be circular, rectangular, rhombic, triangular, fan-shaped or trapezoidal. A cross-sectional size and a length of the contact claw 31 may be obtained according to needs and limited experiments.

The memory contact section 3 is made of a memory alloy with a transformation temperature of 40°C to 70°C. When the temperature of the memory contact section 3 is lower than the transformation temperature, the plurality of contact claws 31 are in an expanded state; and when the temperature of the memory contact section 3 is higher than the transformation temperature, the plurality of contact claws 31 are in a contracted state.

The memory alloy refers to a special metal material which can undergo plastic deformation in a certain temperature range and then restore its original macroscopic shape in another temperature range. In the present disclosure, the temperature point, at which the plastic deformation occurs, is called as a transformation temperature. The transformation temperature of the memory alloy can be changed by changing the content of different metals in the memory alloy. Generally, the transformation temperature is selected to be between 40°C and 70°C. If the transformation temperature is lower than 40°C, the ambient temperature of the terminal will be close to 40 °C even without a current conduction, resulting in the plurality of contact claws 31 being in a contracted state, an aperture of the terminal being smaller, and the mating terminal not being able to be inserted into the terminal having memory function, such that an electric device cannot be plugged for working.

At room temperature, the mating terminal and the terminal having memory function, after being plugged with each other, start to conduct current. Since the plurality of contact claws 31 are in an expanded state at the beginning of plugging, the contact area between the terminal having memory function and the mating terminal is small and the current is large, which leads to a temperature rise of the terminals that are plugged with each other. If the transformation temperature is higher than 70°C, the time of the temperature rise of the terminals will be long, and the electric device will be in a high current state for a long time, which may easily lead to electrical aging, and in serious cases, the electric device may be overloaded and damaged, resulting in unnecessary losses.

Therefore, the transformation temperature of the terminal having memory function is generally set to be between 40°C and 70°C.

In this embodiment, the memory contact section 3 is made of a nickel-titanium alloy, and the transformation temperature (also called a phase transition temperature or a jump temperature) of the memory contact section 3 is 40°C. When the temperature of the memory contact section 3 is lower than the transformation temperature, the plurality of contact claws 31 are in an expanded state; and when the temperature of the memory contact section 3 is higher than the transformation temperature, the plurality of contact claws 31 are in a contracted state, as illustrated in FIGS. 1 and 2.

In this embodiment, the memory contact section 3 is a barrel structure, and the number of the contact claws 31 is greater than or equal to three (e.g., eight). When the temperature of the memory contact section 3 is lower than the transformation temperature, the distances between inner surfaces of outer ends of the plurality of contact claws 31 and an axis of the memory contact section 3 may be increased and decreased alternately in the circumferential direction of the memory contact section 3, so that when the barrel structure is plugged with the mating terminal, only the contact claws 31 with smaller distances can contact the mating terminal, that is, the mating terminal can be inserted into the barrel structure by a small insertion force.

In the terminal having memory function, the barrel structure is plugged with the mating terminal, and the distances between the inner surfaces of the outer ends of the plurality of contact claws 31 and the axis of the memory contact section 3 may be set to be long and short alternately, without requiring an insertion force, so that the work is easier, and the working efficiency is improved.

In the invention, the memory contact section 3 is a barrel structure, and the number of the contact claws 31 is greater than or equal to three (e.g., eight). The cross-sectional areas of the plurality of contact claws 31 is set to be increased and decreased alternately in the circumferential direction of the memory contact section 3. The cross-sectional area of the contact claw 31 is related to the elasticity of the contact claw 31 itself, i.e., the elasticity of the contact claw 31 increases as the cross-sectional area increases. In order that the gripping force between the barrel structure and the mating terminal is evenly distributed, the cross-sectional areas of the plurality of contact claws 31 are set to be alternately large and small, so that the elastic force of the contact claws can be evenly distributed on the mating terminal.

In addition, in order to reduce the insertion force when the barrel structure is plugged with the mating terminal, the distance between the inner surface of the outer end of the contact claw 31 with a larger cross-sectional area and the axis of the memory contact section 3 is greater than the distance between the inner surface of the outer end of the contact claw 31 with a smaller cross-sectional area and the axis of the memory contact section 3, so that the contact claw with a larger cross-sectional area and a larger elastic force will not restrict the insertion of the mating terminal, and the contact claw with a smaller cross-sectional area and a smaller elastic force will guide the insertion of the mating terminal, which not only ensures the smooth insertion of the mating terminal into the barrel structure, but also greatly reduces the insertion force, thereby improving the working efficiency.

The outer end of the contact claw 31 (i.e., an upper end of the contact claw 31 in FIG. 1) may be provided with a first inner protrusion 32. The mating terminal is generally a male terminal. When the use environment is harsh or during a long-term use in the outdoors, there will be sand, dirt or foreign matters on the surface of the mating terminal, and if no treatment is made, it will not only affect the contact effect between the contact claws 31 and the mating terminal and reduce the electrical performance, but also damage the surfaces of the contact claws 31 and the mating terminal, destroy the plating layers, and greatly reduce the service lives of the plugging terminals. In serious cases, the plugging joint will be overheated and burned due to the increase of the contact resistance, resulting in safety accidents. The outer end of the contact claw 31 is provided with the first inner protrusion 32, which is attached to the outer surface of the mating terminal. When the terminal and the mating terminal are plugged with each other, the inner surface of the first inner protrusion 32 scrapes the surface of the mating terminal, so as to effectively remove the sand, dirt and foreign matters from the surface of the mating terminal, thereby achieving a closer contact between the terminal and the mating terminal and achieving a better electrical performance.

In this embodiment, the terminal having memory function further includes a cable connection section 1 and a transition section 2, and the cable connection section 1, the transition section 2 and the memory contact section 3 are connected in sequence. The transition section 2 is a connection transition area between cable connection section 1 and memory contact section 3, and is also an area where the terminal having memory function is assembled and fixed with the electric device. The cable connection section 1 can be electrically connected to the cable, so that electric energy can be transmitted through the plugging of the terminal having memory function and the mating terminal.

The cable connection section 1 has a flat plate structure, a U-shaped structure, a major arc structure, a barrel structure, a cylindrical structure, a bowl structure or a polygonal structure. The cable connection section 1 is electrically connected to the cable by a crimping or welding process. The cable connection section 1 is designed into various structures, so that different structures may be selected for the cable connection section 1 depending on the electrical connection requirements and the assembly environment of the electric device, and a stable electrical connection between the cable connection section 1 and the cable can be established. Generally, the U-shaped structure, the major arc structure, the barrel structure or the polygonal structure is suitable for crimping and welding, and the flat plate structure or the bowl structure is suitable for welding.

The crimping is to apply a pressure to deform the cable connection section 1 and part of wires inside it together by means of mechanical deformation, so that the wires are in full contact with the interior of the cable connection section 1 and connected thereto by friction. The welding includes ultrasonic welding, resistance welding, arc welding, pressure welding, electromagnetic welding, laser welding, etc. The cable connection section 1 and part of the wires are welded together to achieve stable electrical and mechanical performances.

The ultrasonic welding is to transmit high-frequency vibration waves to the surfaces of two objects to be welded, so that the surfaces of the two objects rub against each other under pressure to form a fuse molecular layer.

The resistance welding refers to a method of welding by passing strong current through a contact point between an electrode and a workpiece to generate heat by a contact resistance.

The arc welding is to convert electric energy into heat energy and mechanical energy needed for welding by using electric arc as a heat source and the physical phenomenon of air discharge, so as to connect metals. The arc welding mainly includes shielded metal arc welding, submerged arc welding and gas shielded welding, etc.

The pressure welding is a method of applying a pressure to welding parts to make joint surfaces closely contact and produce certain plastic deformation to complete the welding.

The electromagnetic welding method is to use an electromagnetic induction coil to generate short but very strong current from a pulse generator, and an electromagnetic field generated by the induction coil can instantly collide and squeeze the materials to be welded together.

The laser welding is an efficient and precise welding method using a laser beam of a high energy density as a heat source.

As needed, the transition section 2 may be externally provided with a sealing-ring mounting groove 21 in which a sealing ring is mounted. The sealing ring is made of rubber, which is well deformable and waterproof, and can be directly compressed outside the transition section 2 together with the mating terminal to form a sealing structure, thereby effectively preventing external water from entering the terminal, ensuring the safety of electrical connection, and prolonging the service life of the terminal.

The transition section 2 may be externally provided with a sensor mounting through hole 22 in which a temperature sensor is partially or wholly disposed.

The temperature sensor is in interference fit with the through hole 22.

An outer wall of the temperature sensor is provided with external threads, the through hole 22 is provided with internal threads, and the temperature sensor is in threaded connection with the through hole 22.

The temperature sensor is externally provided with a shielding layer, which can prevent data of the temperature sensor from an external interference and ensure the accuracy of the data.

The temperature sensor is an NTC (Negative Temperature Coefficient) temperature sensor or a PTC (Positive Temperature Coefficient) temperature sensor. The two temperature sensors are advantageous in that they are small in volume and can measure a gap that cannot be measured by other thermometers; they are convenient to use and the resistance value can be arbitrarily selected to be between 0.1 and 100 kΩ; they are easy to be processed into complex shapes and can be mass-produced; and owing to the good stability and the strong overload capacity, they are suitable for products such as adapters which require a small volume and a stable performance.

In some embodiments, there is provided a temperature acquisition device, an output module of which includes a programmable controller, a transmission unit and a power supply. The temperature sensor is electrically connected to the programmable controller, and the transmission unit is configured to wirelessly or wiredly transmit temperature information obtained by the programmable controller.

Further, in some embodiments, there is provided a temperature acquisition system, in which an acquisition terminal is configured to obtain temperature information through an information receiving device, a storage unit is configured to store the temperature information, and an comparison unit is configured to compare the temperature information with preset safety information; if the acquired information exceeds the preset information, the acquisition terminal sends an alarm through an alarm unit to inform the staff. A plurality of acquisition terminals are remotely connected to a server, which monitors all the acquired temperature information and may transmit the temperature information to a mobile terminal, so that the staff can master the temperature information of each terminal in a work area anytime and anywhere.

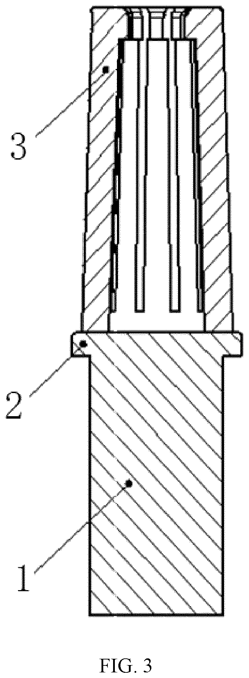

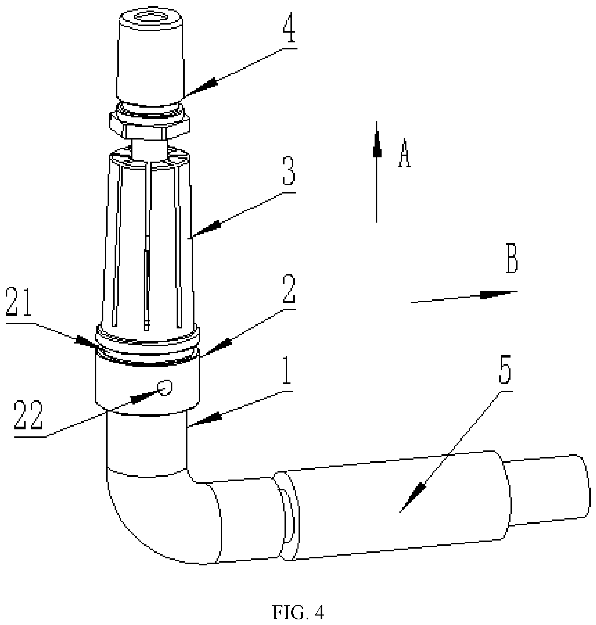

In this embodiment, an included angle between a plugging direction A of the contact section 3 and a wiring direction B of the cable connection section 1 may be greater than 0° and less than or equal to 180°, depending on a mounting direction of the electric device and an outlet direction of the cable, which is convenient for a designer to select different outlet directions according to the actual layout environment of the terminal having memory function, thereby reducing the volume of electric device, optimizing the contact area between the terminal and the wire, and enhancing the electrical performance of the terminal having the memory function. As illustrated in FIG. 3, the included angle between the plugging direction A of the contact section 3 and the wiring direction B of the cable connection section 1 is equal to 180°. As illustrated in FIG. 4, the included angle between the plugging direction A of the contact section 3 and the wiring direction B of the cable connection section 1 is equal to 90°.

In this embodiment, the contact claw 31 is provided with a plating layer, which is made of one or more selected from the group consisting of gold, silver, nickel, tin, zinc, tin-lead alloy, silver-antimony alloy, palladium, palladium-nickel alloy, graphite silver, graphene silver and silver-gold-zirconium alloy. As an active metal, copper or aluminum will react with oxygen and water during use, so one or more inactive metals are needed as the material of the plating layer to prolong the service life of the terminal having memory function. In addition, for a metal contact to be plugged and unplugged frequently, a metal with good wear resistance is needed to serve as the plating layer, thereby greatly prolonging the service life of the contact. Moreover, some contacts require good conductivity, and the above metals have better conductivity and stability than copper or copper alloy and aluminum or aluminum alloy, so that the terminal having memory function can obtain a better electrical performance and a longer service life.

In order to demonstrate the influences of different materials of the plating layer on the overall performance of the terminal having memory function, the inventor adopts terminal samples having memory function and mating terminals to carry out a series of tests on the number of times of plugging and unplugging and the corrosion resistance time. The terminal samples having memory function have the same specification and the same material, and have plating layers of different materials. The mating terminals have the same specification. The experimental results are shown in Table 1 below.

The number of times of plugging and unplugging in Table 1 are obtained as follows: the terminal sample having memory function and the mating terminal are fixed on an experimental platform; a mechanical device is used to simulate the plugging and unplugging of the terminal having memory function with the mating terminal; after every 100 times of plugging and unplugging, it is necessary to stop and observe the damage of the plating layer on the surface of the terminal having memory function. When the plating layer on the surface of the terminal having memory function is scratched and the material of the terminal having memory function itself is exposed, the experiment is stopped, and then the number of times of plugging and unplugging at that time is recorded. If the number of times of plugging and unplugging is less than 8000, it is considered as unqualified.

The test on the corrosion resistance time in Table 1 is to put the terminal having memory function into a salt spray test chamber, spray salt fog for each position on the terminal having memory function, take out and clean the terminal having memory function every 20 hours to observe the corrosion condition of the surface, which is a cycle. When a corrosion area of the surface of the terminal having memory function is more than 10% of a total area thereof, the test is stopped, and then the number of cycles at that time is recorded. In this embodiment, if the number of cycles is less than 80, it is considered as unqualified.

**Table 1: Influences of Different Materials of Plating Layer on the Number of Times of Plugging and Unplugging and Corrosion Resistance of Terminal having Memory Function**

| Different Materials of Plating Layer | | | | | | | | | | | |
|---|---|---|---|---|---|---|---|---|---|---|---|
| Gold | Silver | Nickel | Tin | Tin-lead alloy | Zinc | Silver-antimony alloy | Palladium | Palladium-nickel alloy | Graphite silver | Graphene silver | Silver-gold-zirconium alloy |

| Number of Times of Plugging and Unplugging | | | | | | | | | | | |
|---|---|---|---|---|---|---|---|---|---|---|---|
| 12500 | 11800 | 9500 | 9200 | 9800 | 9500 | 12200 | 12100 | 12200 | 12500 | 12000 | 10000 |

| Number of Cycles of Corrosion Resistance Tests | | | | | | | | | | | |
|---|---|---|---|---|---|---|---|---|---|---|---|
| 135 | 120 | 92 | 88 | 89 | 95 | 126 | 118 | 121 | 129 | 130 | 133 |

As can be seen from Table 1, when the material of the plating layer is selected from gold, silver, silver-antimony alloy, palladium, palladium-nickel alloy, graphite silver, graphene silver or silver-gold-zirconium alloy, the experimental result largely exceeds the standard value and the performance is stable. When the material of the plating layer is selected from nickel, tin, tin-lead alloy or zinc, the experimental result can also meet the requirement. Thus, the inventor adopts the material of the plating layer selected from one or more of gold, silver, nickel, tin, tin-lead alloy, zinc, silver-antimony alloy, palladium, palladium-nickel alloy, graphite silver, graphene silver and silver-gold-zirconium alloy.

In this embodiment, the plating layer includes a bottom layer and a surface layer. In some embodiments, the plating layer is formed using a multi-layer plating method. After the terminal having memory function is processed, there are still many cracks and holes under the surface micro-interface. These cracks and holes are the main reasons for the wear and corrosion of the terminal having memory function during use. Therefore, it is desirable to plate a bottom layer on the surface of the terminal having memory function to fill the cracks and holes on the surface, so that the surface of the terminal having memory function is smooth and free of defects, and then a surface layer is plated, so that the combination is firmer and smoother and the surface of the plating layer has no cracks or holes. As a result, the wear resistance, the corrosion resistance and the electrical performance of the terminal having memory function are better, and the service life of the terminal having memory function is greatly prolonged.

The bottom layer is made of one or more selected from the group consisting of gold, silver, nickel, tin, tin-lead alloy and zinc. The surface layer is made of one or more selected from the group consisting of gold, silver, nickel, tin, tin-lead alloy, silver-antimony alloy, palladium, palladium-nickel alloy, graphite silver, graphene silver and silver-gold-zirconium alloy.

In this embodiment, the bottom layer has a thickness of 0.01 µm to 18 µm, and exemplarily a thickness of 0.1 µm to 9 µm.

In this embodiment, the surface layer has a thickness of 0.6 µm to 56 µm, and exemplarily a thickness of 1 µm to 30 µm.

In order to demonstrate the influence of the change of the thickness of the bottom layer of the plating layer on the overall performance of the terminal having memory function, the inventor adopts terminal samples and mating terminals to carry out a series of tests on the temperature rise and the corrosion resistance time. The terminal samples have the same specification and the same material, and have the nickel-plated bottom layers of different thicknesses and the silver-plated surface layers of the same thickness The mating terminals have the same specification. The experimental results are shown in Table 2 below.

The test on the temperature rise in Table 2 is to supply the same power to the terminals having memory function and the mating terminals that have been plugged with the terminals having memory function, detect the temperatures of the same positions of the terminals having memory function before the power supply and after the temperature is stable in a closed environment, and take a difference therebetween to obtain an absolute value. In this embodiment, if the temperature rise is greater than 50K, it is considered as unqualified.

The test on the corrosion resistance time in Table 2 is to put the terminal having memory function into a salt spray test chamber, spray salt fog for each position on the terminal having memory function, take out and clean the terminal having memory function every 20 hours to observe the surface corrosion, which is a cycle. When a corrosion area of the surface of the terminal having memory function is more than 10% of a total area thereof, the test is stopped, and then the number of cycles at that time is recorded. In this embodiment, if the number of cycles is less than 80, it is considered as unqualified.

**Table 2: Influences of Different Thicknesses of bottom layer of plating layer on Temperature Rise and Corrosion Resistance of Terminal having Memory Function**

| Different Nickel-Plated Thicknesses of Bottom Layer (µm) | | | | | | | | | | | | | | | |
|---|---|---|---|---|---|---|---|---|---|---|---|---|---|---|---|
| 0.001 | 0.005 | 0.01 | 0.05 | 0.1 | 0.5 | 1 | 3 | 5 | 6 | 9 | 11 | 13 | 15 | 17 | 19 |

| Temperature Rise of Plugging Piece (k) | | | | | | | | | | | | | | | |
|---|---|---|---|---|---|---|---|---|---|---|---|---|---|---|---|
| 10.8 | 12.2 | 14.6 | 16. 4 | 18.3 | 21.3 | 24.2 | 26.7 | 28.7 | 31.2 | 35.6 | 40.5 | 43.6 | 47.4 | 58.3 | 67.2 |

| Number of Cycles of Corrosion Resistance Tests | | | | | | | | | | | | | | | |
|---|---|---|---|---|---|---|---|---|---|---|---|---|---|---|---|
| 68 | 78 | 83 | 92 | 103 | 108 | 113 | 117 | 121 | 124 | 127 | 129 | 130 | 131 | 129 | 127 |

As can be seen from Table 2, when the thickness of the nickel-plated bottom layer is less than 0.01 µm, although the temperature rise of the terminal having memory function is qualified, the number of cycles of corrosion resistance tests of the terminal having memory function is less than 80 since the bottom layer of the plating layer is thin, and the performance requirement of the terminal having memory function cannot be met, which greatly affects the overall performance and the service life of the plugged structure, and causes the product life to be reduced sharply or even failure burning accidents in serious cases. When the thickness of the nickel-plated bottom layer is greater than 15 µm, the heat generated by the terminal having memory function cannot be radiated since the bottom layer of the plating layer is thick, which makes the temperature rise of the terminal having memory function unqualified, and the thick plating layer is easy to fall off the surface of the terminal, resulting in a decrease in the number of cycles of corrosion resistance tests. Thus, the inventor selects the thickness of the bottom layer of the plating layer to be 0.01 µm to 15 µm. Exemplarily, the inventors finds that the comprehensive effect of the temperature rise and the corrosion resistance of the terminal having memory function is better when the thickness of the bottom layer of the plating layer is 0.1 µm to 9 µm. Therefore, in order to further improve the safety, reliability and practicability of the product itself, it is preferable that the thickness of the bottom layer of the plating layer is 0.1 µm to 9 µm.

In order to demonstrate the influence of the change of the thickness of the surface layer of the plating layer on the overall performance of the terminal having memory function, the inventor adopts the terminal samples and the matched plugging pieces to carry out a series of tests on the temperature rise and the corrosion resistance time. The terminal samples have the same specification and the same material, and have the nickel-plated bottom layers of the same thickness and the silver-plated surface layers of different thicknesses. The matched plugging pieces have the same specification. The experimental results are shown in Table 3 below.

The experimental method is the same as that described above.

**Table 3: Influences of Different Thicknesses of Surface Layer of Plating Layer on Temperature Rise and Corrosion Resistance of Terminal having Memory Function**

| Different Silver-Plated Thicknesses of Surface Layer (µm) | | | | | | | | | | | | | | | | |
|---|---|---|---|---|---|---|---|---|---|---|---|---|---|---|---|---|
| 0.1 | 0.5 | 1 | 1.5 | 5 | 10 | 15 | 20 | 25 | 30 | 35 | 40 | 45 | 50 | 55 | 60 | 65 |

| Temperature Rise of Plugging Piece (k) | | | | | | | | | | | | | | | | |
|---|---|---|---|---|---|---|---|---|---|---|---|---|---|---|---|---|
| 11.2 | 13.9 | 15.1 | 17.2 | 21.3 | 23.4 | 25.5 | 28.1 | 31.2 | 35.2 | 38.5 | 42.9 | 45.2 | 48.0 | 49.9 | 53.6 | 69.5 |

| Number of Cycles of Corrosion Resistance Tests | | | | | | | | | | | | | | | | |
|---|---|---|---|---|---|---|---|---|---|---|---|---|---|---|---|---|
| 75 | 83 | 90 | 93 | 95 | 97 | 99 | 103 | 106 | 109 | 15 | 117 | 119 | 121 | 125 | 123 | 121 |

As can be seen from Table 3, when the thickness of the silver-plated surface layer is less than 0.5 µm, although the temperature rise of the terminal having memory function is qualified, the number of cycles of corrosion resistance tests of the terminal having memory function is less than 80 since the surface layer of the plating layer is thin, and the performance requirement of the terminal having memory function cannot be met, which greatly affects the overall performance and the service life of the plugged structure, and causes the product life to be reduced sharply or even failure burning accidents in serious cases. When the thickness of the silver-plated surface layer is greater than 55 µm, the heat generated by the terminal having memory function cannot be radiated since the bottom layer of the plating layer is thick, which makes the temperature rise of the terminal having memory function unqualified, and the thick plating layer is easy to fall off the surface of the terminal, resulting in a decrease in the number of cycles of corrosion resistance tests. Moreover, since the surface layer of the plating layer is made of noble metal, the thick plating layer does not improve the performance, and there is no use value. Thus, the inventor selects the thickness of the silver-plated surface layer to be 0.1 µm to 55 µm. Exemplarily, the inventors finds that the comprehensive effect of the temperature rise and the corrosion resistance of the terminal having memory function is better when the thickness of the surface layer of the plating layer is 1 µm to 35 µm. Therefore, in order to further improve the safety, reliability and practicability of the product itself, it is preferable that the thickness of the surface layer of the plating layer is 1 µm to 35 µm.

The plating layer may be disposed on the contact claw 31 by means of electroplating, electroless plating, magnetron sputtering, vacuum plating or the like.

The electroplating is a process of plating, on a surface of some metal, a thin layer of other metal or alloy by using electrolysis principle.

The chemical plating is a deposition process that produces a metal through a controllable oxidation-reduction reaction under a metal catalytic action.

The magnetron sputtering is to use an interaction of a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal and non-metal films on the surface of plastic parts by means of distillation or sputtering under a vacuum condition.

The cable connection section 1 is made of a memory alloy, which is an intelligent metal with a memory, and its microstructure has two relatively stable states. The memory alloy may be changed into any desired shape at a high temperature and may be stretched at a low temperature. When being reheated, the alloy will remember its original shape and change back. The memory alloy has different crystal structures at temperatures above and below its transformation temperature, and when the temperature changes around the transformation temperature, the memory alloy will contract or expand, thereby causing a change of its morphology.

In some embodiments, the memory alloy is specifically a nickel-titanium alloy, which is a binary alloy composed of nickel and titanium. The nickel-titanium alloy has two different crystal structure phases, i.e., an austenite phase and a martensite phase, due to the changes of the temperature and the mechanical pressure. The contact claw 31 with a transformation temperature of 40°C to 70°C can be obtained through the nickel-titanium alloy with different metal contents.

The cable connection section and the transition section are made of copper or copper alloy. Copper has good electrical conductivity and excellent ductility, and is one of the conventional materials for electrical conduction.

When a barrel terminal is made of copper alloy, it is preferable that the copper alloy contains tellurium, so that the terminal has good electrical conductivity and easy-cutting performance, thereby ensuring the electrical performance and improving the machinability. Meanwhile, the tellurium copper alloy has excellent elasticity.

The tellurium content in the tellurium copper alloy is exemplary 0.1% to 5%, and further exemplary 0.2% to 1.2%.

The inventor selects ten plugging terminals with the same shape and with expandable and contractible slits of the same width for testing, and each terminal is made of tellurium copper alloy, in which the tellurium content of the ten plugging terminals is 0.05%, 0.1%, 0.2%, 1%, 1.2%, 1.8%, 3%, 5%, 6% and 7% respectively. The test results are shown in Table 4. In this embodiment, an ideal value is that the conductivity of tellurium copper alloy is more than 99%.

**Table 4: Influences of Tellurium Copper Alloy with Different Tellurium Contents on Conductivity**

| | | | | | | | | | | |
|---|---|---|---|---|---|---|---|---|---|---|
| Tellurium Content | 0.05% | 0.1% | 0.2% | 1% | 1.2% | 1.8% | 3% | 5% | 6% | 7% |
| Conductivity | 98.7% | 99.1% | 99.3% | 99.6% | 99.9% | 99.5% | 99.3% | 99.1% | 98.9% | 98.6% |

As can be seen from Table 4, when the tellurium content is less than 0.1% or more than 5%, the electrical conductivity obviously decreases, which cannot meet the actual demand. When the tellurium content is more than or equal to 0.2% and less than or equal to 1.2, the conductivity is the best. Thus, the inventor selects a tellurium copper alloy with a tellurium content of 0.1% to 5%. In a most ideal case, a tellurium copper alloy with a tellurium content of 0.2% to 1.2% is selected.

The working process of the terminal having memory function is introduced as follows.

The cable connection section 1 is made of memory alloy, which is an intelligent metal with a memory, and its microstructure has two relatively stable states. The memory alloy may be changed into any desired shape at a high temperature and may be stretched at a low temperature. When being reheated, the alloy will remember its original shape and change back. The memory alloy has different crystal structures at temperatures above and below its transformation temperature, and when the temperature changes around the transformation temperature, the memory alloy will contract or expand, thereby causing a change of its morphology. According to this characteristic, the terminal having memory function is made of a memory metal with a transformation temperature of 40°C to 70°C, and is manufactured into a required size in a temperature that is higher than the transformation temperature.

For example, in some embodiments, the memory alloy is specifically a nickel-titanium alloy, the memory contact section 3 of the terminal having memory function is plugged with the mating terminal 4, and the corresponding shape can be matched as required. The memory contact section 3 is a split-type circular ring with an inner diameter of φ10 mm. When the temperature is below 40°C, the splits (i.e., contact claws 31) of the memory contact section 3 are opened. After the memory contact section 3 is plugged with the mating terminal 4, the memory contact section 3 is heated to above 40°C , so that the memory contact section 3 restores to its original inner diameter of φ 10 mm, i.e., the memory contact section 3 is in a radially contracted state, thereby achieving close contact with the mating terminal 4. Since the temperature of the terminal having memory function rises during working, when the temperature is more than 40°C, the memory contact section 3 always maintains the size that it has in the radially contracted state, thereby achieving close contact with the mating terminal 4 in the working state. When the mating terminal 4 needs to be released, the temperature of the memory contact section 3 is reduced to below 40°C, so that the memory contact section 3 will be in a radially expanded state and the mating terminal 4 can be pulled out.

### Second Embodiment

This embodiment is a modification to the first embodiment, and differs from first embodiment mainly as follows.

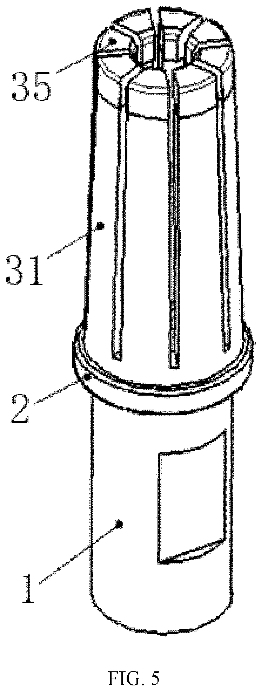

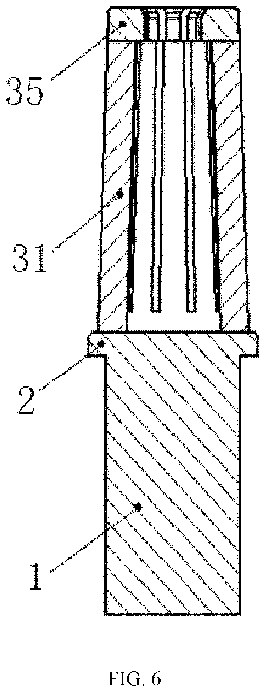

The outer end (i.e., the upper end illustrated in FIG. 5) of the contact claw 31 is externally provided with a conductive contact portion 35, which is made of a material different from that of the contact claw 31. The contact claw 31 is made of a memory alloy, and the conductive contact portion 35 is made of a conductive metal other than a memory alloy. A distance between an inner surface of the conductive contact portion 35 and the axis of the memory contact section 3 is smaller than a distance between the inner surface of the contact claw 31 and the axis of the memory contact section 3, as illustrated in FIGS. 5 and 6.

This embodiment is advantageous in that the usage amount of the memory alloy can be reduced. Other technical features in this embodiment may be the same as those in first embodiment, which will not be repeated here in order to save space.

### Third Embodiment

This embodiment is a modification to the first embodiment, and differs from the first embodiment mainly in that part of the contact claw 31 is made of a memory alloy, and the other part thereof is not made of a memory alloy.

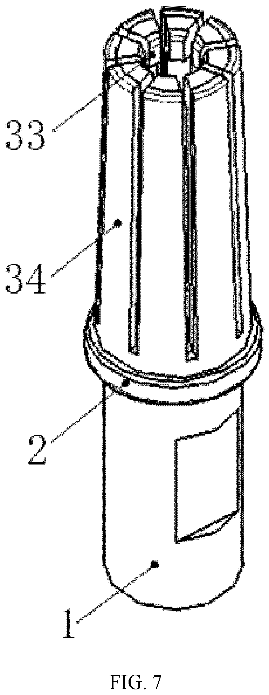

Specifically, the contact claw 31 includes an inner conductive contact strip 33 and an outer memory strip 34 which are stacked from inside to outside. The outer memory strip 34 is made of a memory alloy, and the inner conductive contact strip 33 is made of a conductive fixed metal that is not a memory alloy, i.e., the outer memory strip 34 and the inner conductive contact strip 33 are made of different materials. The memory contact section 3 includes an inner conductive contact barrel and an outer memory barrel that is sleeved on an outer side of the inner conductive contact barrel and is connected to it. The inner conductive contact strip 33 is part of the inner conductive contact barrel and the outer memory strip 34 is part of the outer memory barrel, as illustrated in FIG. 7.

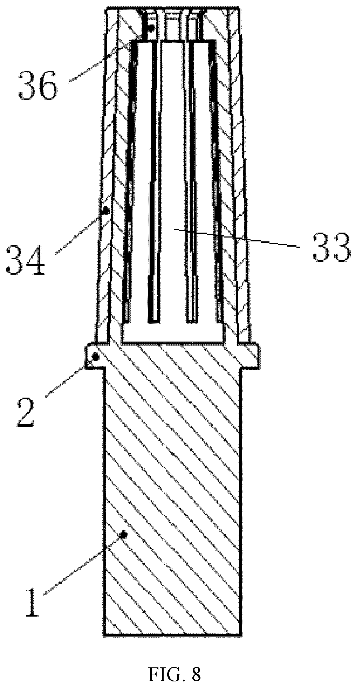

The inner conductive contact strip 33 may have a length the same as that of the outer memory strip 34, and have a thickness less than or equal to that of the outer memory strip 34. An outer end of the inner conductive contact strip 33 is internally provided with a second protrusion 36, as illustrated in FIG. 8.

This embodiment is advantageous in that the usage amount of the memory alloy can be reduced. Other technical features in this embodiment may be the same as those in the first embodiment, which will not be repeated here in order to save space.

Those described above are merely specific embodiments of the present disclosure, rather than limitations thereto. Various modifications and variations can be made to the present disclosure by persons skilled in the art without departing from the scope of the appended claims.

## Claims

1. A terminal having memory function, comprising a memory contact section (3) that comprises a plurality of contact claws (31);
wherein all or part of the contact claw (31) is made of a memory alloy, the plurality of contact claws (31) are arranged at intervals in a circumferential direction of the memory contact section (3), and the plurality of contact claws (31) are capable of radially contracting;
**characterized in that**
the memory contact section (3) is a barrel structure, and the number of the contact claws (31) is greater than or equal to three;
wherein when a temperature of the memory contact section (3) is lower or higher than a transformation temperature, the plurality of contact claws (31) are respectively in an expanded or contracted state;
when a temperature of the memory contact section (3) is lower than a transformation temperature, distances between inner surfaces of outer ends of the plurality of contact claws (31) and an axis of the memory contact section (3) are alternately increased and decreased in the circumferential direction of the memory contact section (3);
cross-sectional areas of the plurality of the contact claws (31) are alternately increased and decreased in the circumferential direction of the memory contact section (3); and
among the plurality of contact claws (31), the distance between the inner surface of the outer end of the contact claw (31) with a larger cross-sectional area and the axis of the memory contact section (3) is greater than the distance between the inner surface of the outer end of the contact claw (31) with a smaller cross-sectional area and the axis of the memory contact section (3).

2. The terminal having memory function according to claim 1, wherein all or part of the contact claw (31) is made of the memory alloy, the memory contact section (3) is a barrel structure, an outer profile of a cross section of the memory contact section (3) is circular or polygonal, and an inner profile of the cross section of the memory contact section (3) is circular or polygonal.

3. The terminal having memory function according to claim 1, wherein the memory contact section (3) has a transformation temperature of 40°C to 70°C.

4. The terminal having memory function according to claim 1, wherein an outer end of the contact claw (31) is internally provided with a first inner protrusion (32).

5. The terminal having memory function according to claim 1, further comprising a cable connection section (1) and a transition section (2); and
the cable connection section (1), the transition section (2) and the memory contact section (3) are disposed in sequence.

6. The terminal having memory function according to claim 5, wherein the transition section (2) is externally provided with a groove in which a sealing ring is assembled;
or,
the transition section (2) is externally provided with a through hole (22) in which a temperature sensor is disposed, and the temperature sensor is externally provided with a shielding layer.

7. The terminal having memory function according to claim 1, wherein an included angle between a plugging direction of the memory contact section (3) and a wiring direction of the cable connection section (1) is greater than 0° and less than or equal to 180°.

8. The terminal having memory function according to claim 1, wherein
an outer end of the contact claw (31) is externally provided with a conductive contact section (35) made of a material different from that of the contact claw (31); and
a distance between the conductive contact section (35) and an axis of the memory contact section (3) is less than a distance between the contact claw (31) and the axis of the memory contact section (3).

9. The terminal having memory function according to claim 1, wherein the contact claw (31) comprises an inner conductive contact strip (33) and an outer memory strip (34) which are stacked from inside to outside; and
the outer memory strip (34) is made of a memory alloy, and the inner conductive contact strip (33) is made of a material different from that of the outer memory strip (34).

10. The terminal having memory function according to claim 9, wherein the inner conductive contact strip (33) has a length the same as that of the outer memory strip (34);
or,
an outer end of the inner conductive contact strip (33) is internally provided with a second protrusion (36).

11. The terminal having memory function according to any one of claims 1 to 10, wherein the contact claw (31) is provided with a plating layer.

12. The terminal having memory function according to claim 11, wherein the plating layer comprises a bottom layer and a surface layer, the bottom layer is made of one or more selected from the group consisting of gold, silver, nickel, tin, tin-lead alloy and zinc, and the surface layer is made of one or more selected from the group consisting of gold, silver, nickel, tin, tin-lead alloy, silver-antimony alloy, palladium, palladium-nickel alloy, graphite silver, graphene silver and silver-gold-zirconium alloy.

13. The terminal having memory function according to claim 12, wherein the bottom layer has a thickness of 0.1 µm to 9 µm, and the surface layer has a thickness of 1 µm to 30 µm.

14. The terminal having memory function according to claim 1, wherein the memory alloy is a nickel-titanium alloy.

15. The terminal having memory function according to claim 5, wherein the cable connection section (1) and transition section (2) are made of copper or copper alloy; and
the copper alloy of the cable connection section (1) and/or the transition section (2) contains tellurium with a tellurium content of 0.1% to 5%.

## Patentansprüche

1. Anschluss, der eine Speicherfunktion aufweist, umfassend einen Speicherkontaktabschnitt (3), der eine Vielzahl von Kontaktklauen (31) umfasst;
wobei die Kontaktklaue (31) ganz oder teilweise aus einer Speicherlegierung besteht, die Vielzahl von Kontaktklauen (31) in Umfangsrichtung des Speicherkontaktabschnitts (3) in Abständen angeordnet sind und die Vielzahl von Kontaktklauen (31) fähig sind, sich radial zusammenzuziehen;
**dadurch gekennzeichnet, dass**
der Speicherkontaktabschnitt (3) eine Zylinderstruktur ist und die Anzahl der Kontaktklauen (31) größer oder gleich drei ist;
wobei sich die Vielzahl von Kontaktklauen (31) in einem expandierten bzw. kontrahierten Zustand befindet, wenn eine Temperatur des Speicherkontaktabschnitts (3) niedriger oder höher als eine Umwandlungstemperatur ist;
wenn die Temperatur des Speicherkontaktabschnitts (3) niedriger als eine Umwandlungstemperatur ist, die Abstände zwischen den Innenflächen der äußeren Enden der Vielzahl der Kontaktklauen (31) und einer Achse des Speicherkontaktabschnitts (3) in Umfangsrichtung des Speicherkontaktabschnitts (3) abwechselnd vergrößert und verkleinert sind;
die Querschnittsflächen der Vielzahl von Kontaktklauen (31) in Umfangsrichtung des Speicherkontaktabschnitts (3) abwechselnd vergrößert und verkleinert sind; und
unter der Vielzahl von Kontaktklauen (31) der Abstand zwischen der Innenfläche des äußeren Endes der Kontaktklaue (31) mit größerem Querschnitt und der Achse des Speicherkontaktabschnitts (3) größer ist als der Abstand zwischen der Innenfläche des äußeren Endes der Kontaktklaue (31) mit kleinerem Querschnitt und der Achse des Speicherkontaktabschnitts (3).

2. Anschluss, der eine Speicherfunktion nach Anspruch 1 aufweist, wobei die Kontaktklaue (31) ganz oder teilweise aus der Speicherlegierung besteht, der Speicherkontaktabschnitt (3) eine Zylinderstruktur aufweist, ein Außenprofil eines Querschnitts des Speicherkontaktabschnitts (3) kreisförmig oder polygonal ist und ein Innenprofil des Querschnitts des Speicherkontaktabschnitts (3) kreisförmig oder polygonal ist.

3. Anschluss, der eine Speicherfunktion nach Anspruch 1 aufweist, wobei der Speicherkontaktabschnitt (3) eine Umwandlungstemperatur von 40 °C bis 70 °C aufweist.

4. Anschluss, der eine Speicherfunktion nach Anspruch 1 aufweist, wobei ein äußeres Ende der Kontaktklaue (31) innen mit einem ersten inneren Vorsprung (32) versehen ist.

5. Anschluss, der eine Speicherfunktion nach Anspruch 1 aufweist, weiter umfassend einen Kabelverbindungsabschnitt (1) und einen Übergangsabschnitt (2); und
der Kabelverbindungsabschnitt (1), der Übergangsabschnitt (2) und der Speicherkontaktabschnitt (3) nacheinander angeordnet sind.

6. Anschluss, der eine Speicherfunktion nach Anspruch 5 aufweist, wobei der Übergangsabschnitt (2) außen mit einer Nut versehen ist, in der ein Dichtungsring montiert ist;
oder
der Übergangsabschnitt (2) außen mit einer Durchgangsbohrung (22) versehen ist, in der ein Temperatursensor angeordnet ist, und der Temperatursensor außen mit einer Abschirmschicht versehen ist.

7. Anschluss, der eine Speicherfunktion nach Anspruch 1 aufweist, wobei ein Einschlusswinkel zwischen einer Einsteckrichtung des Speicherkontaktabschnitts (3) und einer Verdrahtungsrichtung des Kabelverbindungsabschnitts (1) größer als 0° und kleiner oder gleich 180° ist.

8. Anschluss, der eine Speicherfunktion nach Anspruch 1 aufweist, wobei
ein äußeres Ende der Kontaktklaue (31) außen mit einem leitfähigen Kontaktabschnitt (35) versehen ist, der aus einem anderen Material als die Kontaktklaue (31) besteht; und
der Abstand zwischen dem leitfähigen Kontaktabschnitt (35) und einer Achse des Speicherkontaktabschnitts (3) kleiner ist als der Abstand zwischen der Kontaktklaue (31) und der Achse des Speicherkontaktabschnitts (3).

9. Anschluss, der eine Speicherfunktion nach Anspruch 1 aufweist, wobei
die Kontaktklaue (31) einen inneren leitfähigen Kontaktstreifen (33) und einen äußeren Speicherstreifen (34) umfasst, die von innen nach außen gestapelt sind; und
der äußere Speicherstreifen (34) aus einer Speicherlegierung besteht und der innere leitfähige Kontaktstreifen (33) aus einem anderen Material als der äußere Speicherstreifen (34) besteht.

10. Anschluss, der eine Speicherfunktion nach Anspruch 9 aufweist, wobei der innere leitfähige Kontaktstreifen (33) dieselbe Länge wie der äußere Speicherstreifen (34) aufweist;
oder
ein äußeres Ende des inneren leitfähigen Kontaktstreifens (33) innen mit einem zweiten Vorsprung (36) versehen ist.

11. Anschluss, der eine Speicherfunktion nach einem der Ansprüche 1 bis 10 aufweist, wobei die Kontaktklaue (31) mit einer Plattierungsschicht versehen ist.

12. Anschluss, der eine Speicherfunktion nach Anspruch 11 aufweist, wobei die Plattierungsschicht eine Unterschicht und eine Oberflächenschicht umfasst, wobei die Unterschicht aus einem oder mehreren hergestellt ist, ausgewählt aus der Gruppe bestehend aus Gold, Silber, Nickel, Zinn, einer Zinn-Blei-Legierung und Zink, und die Oberflächenschicht aus einem oder mehreren hergestellt ist, ausgewählt aus der Gruppe bestehend aus Gold, Silber, Nickel, Zinn, einer Zinn-Blei-Legierung, einer Silber-Antimon-Legierung, Palladium, Palladium-Nickel-Legierung, Graphit-Silber, Graphen-Silber und einer Silber-Gold-Zirkonium-Legierung.

13. Anschluss, der eine Speicherfunktion nach Anspruch 12 aufweist, wobei die Unterschicht eine Dicke von 0,1 µm bis 9 µm aufweist und die Oberflächenschicht eine Dicke von 1 µm bis 30 µm aufweist.

14. Anschluss, der eine Speicherfunktion nach Anspruch 1 aufweist, wobei die Speicherlegierung eine Nickel-Titan-Legierung ist.

15. Anschluss, der eine Speicherfunktion nach Anspruch 5 aufweist, wobei der Kabelverbindungsabschnitt (1) und der Übergangsabschnitt (2) aus Kupfer oder einer Kupferlegierung bestehen; und
die Kupferlegierung des Kabelverbindungsabschnitts (1) und/oder der Übergangsabschnitt (2) Tellur mit einem Tellurgehalt von 0,1 % bis 5% enthält.

## Revendications

1. Borne présentant une fonction de mémoire, comprenant une section de contact à mémoire (3) qui comprend une pluralité de griffes de contact (31) ;
dans laquelle tout ou partie de la griffe de contact (31) est constituée d'un alliage à mémoire, la pluralité de griffes de contact (31) sont agencées à intervalles dans une direction circonférentielle de la section de contact à mémoire (3), et la pluralité de griffes de contact (31) sont capables de se contracter radialement ;
**caractérisée en ce que**
la section de contact à mémoire (3) est une structure cylindrique, et le nombre des griffes de contact (31) est supérieur ou égal à trois ;
dans laquelle, lorsqu'une température de la section de contact à mémoire (3) est inférieure ou supérieure à une température de transformation, la pluralité de griffes de contact (31) sont respectivement dans un état dilaté ou contracté ;
lorsqu'une température de la section de contact à mémoire (3) est inférieure à une température de transformation, des distances entre des surfaces intérieures d'extrémités extérieures de la pluralité de griffes de contact (31) et un axe de la section de contact à mémoire (3) sont alternativement augmentées et diminuées dans la direction circonférentielle de la section de contact à mémoire (3) ;
des superficies en coupe transversale de la pluralité des griffes de contact (31) sont alternativement augmentées et diminuées dans la direction circonférentielle de la section de contact à mémoire (3) ; et
parmi la pluralité de griffes de contact (31), la distance entre la surface intérieure de l'extrémité extérieure de la griffe de contact (31) avec une plus grande superficie en coupe transversale et l'axe de la section de contact à mémoire (3) est supérieure à la distance entre la surface intérieure de l'extrémité extérieure de la griffe de contact (31) avec une plus petite superficie en coupe transversale et l'axe de la section de contact à mémoire (3).

2. Borne présentant une fonction de mémoire selon la revendication 1, dans laquelle tout ou partie de la griffe de contact (31) est constitué de l'alliage à mémoire, la section de contact à mémoire (3) est une structure cylindrique, un profil extérieur d'une section transversale de la section de contact à mémoire (3) est circulaire ou polygonal, et un profil intérieur de la section transversale de la section de contact à mémoire (3) est circulaire ou polygonal.

3. Borne présentant une fonction de mémoire selon la revendication 1, dans laquelle la section de contact à mémoire (3) présente une température de transformation de 40 °C à 70 °C.

4. Borne présentant une fonction de mémoire selon la revendication 1, dans laquelle une extrémité extérieure de la griffe de contact (31) est munie intérieurement d'une première saillie intérieure (32).

5. Borne présentant une fonction de mémoire selon la revendication 1, comprenant en outre une section de connexion de câble (1) et une section de transition (2) ; et
la section de connexion de câble (1), la section de transition (2) et la section de contact à mémoire (3) sont disposées les uns après les autres.

6. Borne présentant une fonction de mémoire selon la revendication 5, dans laquelle la section de transition (2) est dotée extérieurement d'une rainure dans laquelle un anneau d'étanchéité est assemblé ;
ou
la section de transition (2) est munie extérieurement d'un trou traversant (22) dans lequel un capteur de température est disposé, et le capteur de température est muni extérieurement d'une couche de blindage.

7. Borne présentant une fonction de mémoire selon la revendication 1, dans laquelle un angle inclus entre une direction de branchement de la section de contact à mémoire (3) et une direction de câblage de la section de connexion de câble (1) est supérieur à 0° et inférieur ou égal à 180°.

8. Borne présentant une fonction de mémoire selon la revendication 1, dans laquelle
une extrémité extérieure de la griffe de contact (31) est munie extérieurement d'une section de contact conductrice (35) constituée d'un matériau différent de celui de la griffe de contact (31) ; et
une distance entre la section de contact conductrice (35) et un axe de la section de contact à mémoire (3) est inférieure à une distance entre la griffe de contact (31) et l'axe de la section de contact à mémoire (3).

9. Borne présentant une fonction de mémoire selon la revendication 1, dans laquelle
la griffe de contact (31) comprend une bande de contact conductrice intérieure (33) et une bande à mémoire extérieure (34) qui sont empilées de l'intérieur vers l'extérieur; et
la bande à mémoire extérieure (34) est constituée d'un alliage à mémoire, et la bande de contact conductrice intérieure (33) est constituée d'un matériau différent de celui de la bande à mémoire extérieure (34).

10. Borne présentant une fonction de mémoire selon la revendication 9, dans laquelle la bande de contact conductrice intérieure (33) présente une longueur identique à celle de la bande à mémoire extérieure (34) ;
ou
une extrémité extérieure de la bande de contact conductrice intérieure (33) est dotée intérieurement d'une seconde saillie (36).

11. Borne présentant une fonction de mémoire selon l'une quelconque des revendications 1 à 10, dans laquelle la griffe de contact (31) est munie d'une couche de placage.

12. Borne présentant une fonction de mémoire selon la revendication 11, dans laquelle la couche de placage comprend une couche inférieure et une couche de surface, la couche inférieure est constituée d'un ou plusieurs éléments choisis dans le groupe consistant en de l'or, de l'argent, du nickel, de l'étain, un alliage étain-plomb et zinc, et la couche de surface est constituée d'un ou plusieurs éléments choisis dans le groupe consistant en de l'or, de l'argent, du nickel, de l'étain, un alliage étain-plomb, un alliage argent-antimoine, du palladium, un alliage palladium-nickel, de l'argent graphite, de l'argent graphène et un alliage argent-or-zirconium.

13. Borne présentant une fonction de mémoire selon la revendication 12, dans laquelle la couche inférieure présente une épaisseur de 0,1 µm à 9 µm et la couche de surface présente une épaisseur de 1 µm à 30 µm.

14. Borne présentant une fonction de mémoire selon la revendication 1, dans laquelle l'alliage à mémoire est un alliage nickel-titane.

15. Borne présentant une fonction de mémoire selon la revendication 5, dans laquelle la section de connexion de câble (1) et la section de transition (2) sont constituées de cuivre ou d'alliage de cuivre ; et
l'alliage de cuivre de la section de connexion de câble (1) et/ou de la section de transition (2) contient du tellure avec une teneur en tellure de 0,1 % à 5 %.
